# EUROPÄISCHE PATENTSCHRIFT

(11) **EP 3 502 078 B1**
(45) Veröffentlichungstag und Bekanntmachung des Hinweises auf die Patenterteilung: **22.09.2021**
(21) Anmeldenummer: 17208542.5
(22) Anmeldetag: 19.12.2017
(51) Int. Cl.: C04B 35/01, C04B 35/04, C04B 35/443, C04B 35/622, C04B 35/626, C04B 35/63, C04B 35/66

(54) **FEUERFESTER VERSATZ, EIN VERFAHREN ZUR HERSTELLUNG EINES UNGEFORMTEN FEUERFESTEN KERAMISCHEN ERZEUGNISSES AUS DEM VERSATZ SOWIE EIN DURCH DAS VERFAHREN ERHALTENES UNGEFORMTES FEUERFESTES KERAMISCHES ERZEUGNIS**
REFRACTORY BATCH, A METHOD FOR PRODUCING AN UNSHAPED REFRACTORY CERAMIC PRODUCT FROM THE BATCH, AND AN UNFORMED CERAMIC PRODUCT PRODUCED USING THE METHOD
COMPOSITION RÉFRACTAIRE, PROCÉDÉ DE FABRICATION D'UN PRODUIT CÉRAMIQUE RÉFRACTAIRE NON MOULÉ À BASE DE LADITE COMPOSITION AINSI QUE PRODUIT CÉRAMIQUE RÉFRACTAIRE NON MOULÉ FABRIQUÉ SELON LEDIT PROCÉDÉ

(43) Veröffentlichungstag der Anmeldung: 26.06.2019
(73) Patentinhaber: Refractory Intellectual Property GmbH & Co. KG, 1100 Wien (AT)
(72) Erfinder: Heid, Stefan, 8700 Leoben (AT); Nilica, Roland, 8715 St.Marein Feistritz (AT)
(74) Vertreter: Berkenbrink, Kai-Oliver

(56) Entgegenhaltungen:
- WO-A1-2008/091041
- US-A- 4 061 501

## Beschreibung

Die Erfindung betrifft einen feuerfesten Versatz, ein Verfahren zur Herstellung eines ungeformten feuerfesten keramischen Erzeugnisses aus dem Versatz sowie ein durch das Verfahren erhaltenes ungeformtes feuerfestes keramisches Erzeugnis.

Der Begriff "feuerfestes keramisches Erzeugnis" im Sinne der Erfindung bezeichnet insbesondere feuerfeste Erzeugnisse mit einer Einsatztemperatur von über 600°C und bevorzugt feuerfeste Werkstoffe gemäß DIN 51060: 2000-6, also Werkstoffe mit einem Kegelfallpunkt > SK 17. Die Ermittlung des Kegelfallpunktes kann insbesondere gemäß DIN EN 993-12: 1997-06 erfolgen.

Mit einem "feuerfesten Versatz" wird bekanntermaßen eine Zusammensetzung aus einer oder mehreren Komponenten beziehungsweise Rohstoffen bezeichnet, durch die mittels einer Temperaturbehandlung, also insbesondere mittels eines Brandes, ein feuerfestes keramisches Erzeugnis herstellbar ist.

Das erfindungsgemäße Verfahren dient zur Herstellung eines ungeformten feuerfesten keramischen Erzeugnisses aus dem erfindungsgemäßen Versatz. Der erfindungsgemäße Versatz wird demnach als sogenannte "feuerfeste Masse" verwendet, insbesondere als feuerfeste basische Gießmasse. Das durch das erfindungsgemäße Verfahren erhaltene erfindungsgemäße feuerfeste keramische Erzeugnis liegt demnach als ungeformtes feuerfestes keramisches Erzeugnis vor, also als Erzeugnis, das erhalten wurde, indem der erfindungsgemäße Versatz ungeformt an den Verwendungsort des feuerfesten keramischen Erzeugnisses eingebracht, insbesondere gegossen wurde und dort anschließend zu einem ungeformten feuerfesten Erzeugnis gebrannt wurde.

Feuerfeste basische Gießmassen liegen typischerweise in Form chemisch oder hydraulisch gebundener Gießmassen vor. Solche Massen weisen eine Grundkomponente aus einem oder mehreren Rohstoffen auf Basis Magnesia, insbesondere Sintermagnesia oder Schmelzmagnesia, auf. Bei chemisch gebundenen basischen Gießmassen wird die Grundkomponente beispielsweise über einen Phosphatbinder chemisch gebunden. Bei hydraulisch gebundenen basischen Gießmassen erfolgt die Bindung über ein hydraulisches Bindemittel, beispielsweise Tonerdezement.

Gegenüber einer chemischen oder hydraulischen Bindung weist eine keramische Bindung erhebliche Vorteile auf, insbesondere beispielsweise eine in der Regel höhere Feuerfestigkeit und Korrosionsbeständigkeit, insbesondere auch eine verbesserte Heißbiegefestigkeit sowie einen verbesserten Widerstand gegen Schlackeninfiltration. Ein Versatz zur Herstellung einer keramisch gebundenen basischen Gießmasse wird in EP 825 968 B2 offenbart. Dieser Versatz umfasst eine Grundkomponente in Form von Sintermagnesia, eine Kohlenstoffkomponente in Form von Graphit und Wasser. Grundsätzlich hat sich ein solcher Versatz zur Herstellung einer keramisch gebundenen feuerfesten basischen Gießmasse bewährt. Allerdings ist es nicht möglich, diesem Versatz ein Antioxidans in Form von Aluminium zur Unterdrückung der Oxidation der Kohlenstoffkomponente zuzugeben.

Insoweit ist bekannt, in Kohlenstoff umfassenden Versätzen die Oxidation des Kohlenstoffs mit Luftsauerstoff durch die Gegenwart sogenannter Antioxidantien zu unterdrücken. Als Antioxidantien sind insbesondere Pulver aus Aluminium, Silizium, Magnesium und deren Legierungen bekannt. Diese Pulver reagieren während der Temperaturbeaufschlagung der Masse mit dem Kohlenstoff des Versatzes zu Carbiden sowie mit Luftsauerstoff, wodurch die Oxidation des Kohlenstoffs reduziert wird. Die gebildeten Carbide können sich dabei zudem positiv auf die Festigkeit des erhaltenen, gebrannten Erzeugnisses auswirken. Bevorzugt werden als Antioxidantien Pulver aus Aluminium eingesetzt, da Aluminium aus thermodynamischen Gründen ein wirksameres Antioxidans als Silizium und Magnesium darstellt.

Allerdings würde sich in einem Versatz gemäß EP 825 968 B2 die Verwendung von Aluminium als Antioxidans als extrem schwierig erweisen, vor allem im basischen Milieu, da Aluminium mit dem Wasser in Anwesenheit der basisch reagierenden Grundkomponente sofort unter Bildung von Wasserstoff reagieren würde, was zu erheblichen Schäden (insbesondere Rissbildung) in der Gießmasse beziehungsweise dem daraus gebrannten, ungeformten feuerfesten keramischen Erzeugnis führen würde. Ferner würde die vorbezeichnete Reaktion des Aluminiums die Gießmasse erwärmen, was deren Gießbarkeit verschlechtern würde.

Insoweit könnten als Bindemittel statt Wasser zwar auch Harze oder Peche verwendet werden. Bekanntermaßen weisen diese jedoch Bestandteile auf, die sich bei der Temperaturbeaufschlagung des Versatzes verflüchtigen und geruchsbelästigend oder auch toxisch sind.

WO 2008/091041 A1 offenbart eine feuerfeste Zusammensetzung, welche zusammensetzt ist aus Schmelzkorund, Schmelzmagnesia, Flockengraphit, Aluminium- und Silizium-Metallpulver sowie einem Bindemittel aus Molasse und Magnesiumsulfat.

Der vorliegenden Erfindung liegt die Aufgabe zugrunde, einen kohlenstoffhaltigen feuerfesten Versatz zur Herstellung eines ungeformten feuerfesten basischen keramischen Erzeugnisses zur Verfügung zu stellen, in welchem Aluminium als Antioxidans und gleichzeitig ein wässriges Bindemittel eingesetzt werden kann. Eine weitere Aufgabe der Erfindung besteht darin, einen wie vorstehend ausgebildeten Versatz zur Verfügung zu stellen, welcher in Form einer Gießmasse verwendbar ist. Eine weitere Aufgabe der Erfindung besteht darin, einen wie vorstehend ausgebildeten Versatz zur Verfügung zu stellen, in welchem Aluminium nicht mit dem Wasseranteil des wässrigen Bindemittels unter Bildung von Wasserstoff reagiert beziehungsweise eine solche Reaktion zumindest weitgehend unterdrückt ist. Eine weitere Aufgabe besteht darin, einen wie vorstehend ausgebildeten Versatz zur Verfügung zu stellen, aus dem ein ungeformtes feuerfestes basisches keramisches Erzeugnisses mit einer guten Beständigkeit gegen Schlackeninfiltration herstellbar ist, insbesondere mit einer besseren Beständigkeit gegen Schlackeninfiltration als aus chemisch oder hydraulisch gebundenen Gießmassen hergestellte Erzeugnisse. Eine weitere Aufgabe besteht schließlich darin, einen wie vorstehend ausgebildeten Versatz zur Verfügung zu stellen, aus dem ein ungeformtes feuerfestes basisches keramisches Erzeugnisses mit einer hohen Heißbiegefestigkeit herstellbar ist, insbesondere mit einer besseren Heißbiegefestigkeit als aus chemisch oder hydraulisch gebundenen Gießmassen hergestellte Erzeugnisse.

Zur Lösung dieser Aufgabe wird erfindungsgemäß zur Verfügung gestellt ein feuerfester Versatz, welcher die folgenden Komponenten umfasst:
eine Grundkomponente, umfassend einen oder mehrere Rohstoffe auf Basis Magnesia;
eine Kohlenstoffkomponente, umfassend einen oder mehrere Kohlenstoffträger;
eine Aluminiumkomponente, umfassend einen oder mehrere Träger metallischen Aluminiums;
ein wässriges Bindemittel; und
Aluminiumsulfat.

Überraschend hat sich erfindungsgemäß herausgestellt, dass in Gegenwart von Aluminiumsulfat in einem feuerfesten Versatz zur Herstellung eines ungeformten feuerfesten Erzeugnisses auf Basis Magnesia Aluminium als Antioxidans zusammen mit einem wässrigen Bindemittel verwendet werden kann. Denn erfindungsgemäß hat sich überraschend herausgestellt, dass in Gegenwart von Aluminiumsulfat in einem solchen Versatz die Reaktion des Aluminiums mit dem Wasseranteil des Bindemittels vollständig oder zumindest weitgehend unterdrückt werden kann. Vor diesem Hintergrund ist erfindungsgemäß vorgesehen, dass ein feuerfester Versatz zur Herstellung eines ungeformten feuerfesten keramischen Erzeugnisses auf Basis Magnesia zur Verfügung gestellt wird, der neben einer Grundkomponente auf Basis Magnesia, einer Kohlenstoffkomponente, Aluminium als Antioxidans und einem wässrigen Bindemittel ferner eine Komponente in Form von Aluminiumsulfat umfasst.

Erfindungsgemäß hat sich herausgestellt, dass Aluminiumsulfat seine wie vorstehend ausgeführten, vorteilhaften Eigenschaften in gattungsgemäßen Versätzen insbesondere dann wirksam entfalten kann, wenn es in einem Anteil von wenigstens 0,05 Masse-% im Versatzvorliegt. Insoweit ist bevorzugt vorgesehen, dass Aluminiumsulfat in einem Anteil von wenigstens 0,05 Masse-% im Versatz vorliegt. Ab einem Anteil von 0,1 Masse-% kann Aluminiumsulfat seine vorteilhaften Eigenschaften noch wirksamer entfalten, so dass bevorzugt vorgesehen ist, dass Aluminiumsulfat in einem Anteil von wenigstens 0,1 Masse-% im Versatz vorliegt, noch bevorzugter in einem Anteil von wenigstens 0,15 Masse-% und noch bevorzugter in einem Anteil von wenigstens 0,2 Masse-%. Die vorstehenden Angaben in Masse-% sind jeweils bezogen auf die Gesamtmasse des Versatzes.

Ferner hat sich herausgestellt, dass die feuerfesten Eigenschaften eines aus dem Versatz herstellbaren, ungeformten feuerfesten keramischen Erzeugnisses nachteilig beeinflusst werden können, wenn Aluminiumsulfat in einem Anteil von über 1,0 Masse-% im Versatz vorliegt. Insbesondere hat sich insoweit herausgestellt, dass der Versatz mit einem zunehmenden Massenanteil des Aluminiumsulfates schneller ansteift und bei einem Anteil des Aluminiumsulfates von über 1,0 Masse-% so schnell ansteift, dass eine Verarbeitung und Verwendung des Versatzes, insbesondere als Gießmasse, praktisch nicht mehr möglich ist. Ein solches Ansteifen kann ab einem Anteil von etwa 0,5 Masse-% Aluminiumsulfat beobachtet werden, so dass das Ansteifen des Versatzes gezielt durch einen Massenanteil des Aluminiumsulfates im Bereich von 0,5 bis 1,0 Masse-% eingestellt werden kann. Insoweit kann nach einer Ausführungsform vorgesehen sein, dass das Aluminiumsulfat höchstens in einem Anteil von 1,0 Masse-% im Versatz vorliegt; diese Obergrenze kann insbesondere gewählt sein, wenn durch das Aluminiumsulfat auch das Ansteifen des Versatzes eingestellt werden soll. Insoweit kann nach einer alternativen Ausführungsform vorgesehen sein, dass das Aluiniumsulfat höchstens in einem Anteil von höchstens 0,5 Masse-% im Versatz vorliegt; diese Obergrenze kann insbesondere gewählt sein, wenn durch das Aluminiumsulfat der Versatz nicht angesteift werden soll. Insofern kann das Aluminiumsulfat bevorzugt in einem Anteil im Bereich von 0,05 bis 1,0 Masse-% im Versatz vorliegen, noch bevorzugter in einem Anteil von 0,1 bis 1,0 Masse-% und noch bevorzugter in einem Anteil im Bereich von 0,2 bis 1,0 Masse-%. Soweit durch das Aluminiumsulfat der Versatz nicht angesteift werden soll, liegt dieses bevorzugt in einem Anteil im Bereich von 0,05 bis 0,5 Masse-% im Versatz vor und noch bevorzugter in einem Anteil im Bereich von 0,1 bis 0,5 Masse-%. Soweit durch das Aluminiumsulfat der Versatz gezielt angesteift werden soll, liegt dieses bevorzugt in einem Anteil im Bereich von 0,5 bis 1,0 Masse-% im Versatz vor. Die vorstehenden Angaben in Masse-% sind jeweils bezogen auf die Gesamtmasse des Versatzes.

Erfindungsgemäß wurde festgestellt, dass wasserlösliche Sulfate die Reaktion des Aluminiums mit dem Wasseranteil des Bindemittels umso wirksamer unterdrücken, umso höher die Löslichkeit des jeweiligen wasserlöslichen Sulfates in Wasser ist.

Eine Löslichkeit von wenigstens 25 g pro 100 g Wasser weist Aluminiumsulfat (Al₂(SO₄)₃, also "Dialuminumtrisulfat" gemäß IUPAC-Nomenklatur; Löslichkeit: 38,5 g/100 g H₂O) auf.

Unter "Löslichkeit" wird hierin gemäß allgemeinem Verständnis dieses Begriffes verstanden das bei Sättigung vorliegende Verhältnis der gelösten Masse des Aluminiumsulfates zur Masse an Wasser bei Raumtemperatur (25°C). Eine "Löslichkeit von wenigstens 25 g pro 100 g Wasser" des Aluminiumsulfates bezeichnet insoweit beispielsweise, dass bei Sättigung und Raumtemperatur 25 g dieses Sulfates in 100 g Wasser gelöst sind.

Zur Bestimmung der Löslichkeit kann auf die aus dem Stand der Technik bekannten Methoden zurückgegriffen werden. Beispielsweise können in 100 g destilliertes Wasser bei Raumtemperatur so lange wasserlösliche Sulfate eingerührt werden, bis ein Bodensatz erkennbar ist. Die Lösung kann anschließend eine Zeit lang stehen gelassen werden, insbesondere wenigstes etwa 24 Stunden, bis sich eine klare Lösung gebildet hat. Die Lösung kann anschließend abfiltriert werden und die Konzentration des Sulfates mit den bekannten Bestimmungsmethoden bestimmt werden, beispielsweise mittel Atomemissionsspektrometrie (AES) oder Titration. Gegebenenfalls kann die Probe vor der Bestimmung der Konzentration noch verdünnt werden.

Vorteilhaft ist, dass Aluminiumsulfat sehr gut in Wasser lösbar ist. Insofern liegt Aluminiumsulfat bevorzugt gelöst in Wasser, also in gelöster Form, im Versatz vor. Besonders bevorzugt kann Aluminiumsulfat gelöst im Wasser des wässrigen Bindemittels im Versatz vorliegen. Indem Aluminiumsulfat in Wasser, insbesondere im Wasser des wässrigen Bindemittels, gelöst im Versatz vorliegt, kann Aluminiumsulfat besonders gleichmäßig und homogen verteilt über das gesamte Volumen des Versatzes in diesem vorliegen, so dass Aluminiumsulfat seine vorteilhaften Eigenschaften in Hinblick auf die Unterdrückung der Reaktion des Aluminiums mit dem Wasseranteil des wässrigen Bindemittels über das gesamte Volumen des Versatzes entfalten kann.

Aluminiumsulfat kann, insbesondere auch soweit es wie vorstehend ausgeführt gelöst in Wasser vorliegt, in hydratisierter Form im Versatz vorliegen. Beispielsweise kann Aluminiumsulfat insoweit in Form von Al₂(SO₄)₃ * 17 H₂O vorliegen. Soweit
Aluminiumsulfat in hydratisierter Form vorliegt, sind die hierin gemachten Angaben zu den Massenanteilen, in denen Aluminiumsulfat im Versatz vorliegt, stets bezogen auf deren reine Sulfatform, also deren nicht-hydratisierte Form. Soweit insoweit beispielsweise Aluminiumsulfat in Form von Al₂(SO₄)₃ * 17 H₂O vorliegt, sind die zu diesem Hydrat gemachten Angaben zu Massenanteilen bezogen auf die Form des nicht hydratisierten Aluminiumsulfats, also Al₂(SO₄)₃.

Bei dem Bindemittel des erfindungsgemäßen Versatzes handelt es sich um ein wässriges Bindemittel, also ein Wasser umfassendes Bindemittel, insbesondere ein auf Wasser basierendes Bindemittel. Bevorzugt umfasst das Bindemittel Wasser. Neben Wasser kann das Bindemittel noch einen oder mehrere weitere Bestandteile umfassen, insbesondere beispielsweise noch wenigstens ein Verdickungsmittel, insbesondere ein Verdickungsmittel in Form von Polyacrylsäure. Nach einer bevorzugten Soweit das wässrige Bindemittel die Substanzen Wasser und Polyacrylsäure umfasst, kann, jeweils bezogen auf die Gesamtmasse des wässrigen Bindemittels, der Anteil an Wasser im Bindemittel im Bereich von 80 bis 95 Masse-% und der Anteil an Polyacrylsäure im Bereich von 5 bis 20 Masse-% liegen. Jeweils bezogen auf die Gesamtmasse des wässrigen Bindemittels kann besonders bevorzugt der Anteil an Wasser im Bindemittel im Bereich von 85 bis 92 Masse-% und der Anteil an Polyacrylsäure im Bereich von 8 bis 15 Masse-% liegen.

Die Aluminiumkomponente des erfindungsgemäßen Versatzes besteht aus einem oder mehreren Trägern metallischen Aluminiums. Bevorzugt besteht die Aluminiumkomponente aus einem oder mehreren der folgenden Träger metallischen Aluminiums: metallisches Aluminium oder wenigstens eine Aluminium umfassende Metalllegierung.

Aluminium liegt erfindungsgemäß als "metallisches" Aluminium im Versatz vor, soweit dieses nicht in gebundener Form vorliegt, also beispielsweise nicht als Oxid, also beispielsweise nicht in Form von Korund (Al₂O₃) oder Magnesiaspinell (MgAl₂O₄).

Soweit die Aluminiumkomponente in Form wenigstens einer Aluminium umfassenden Metalllegierung vorliegt, kann diese Metalllegierung insbesondere in Form einer oder mehrere der Metalllegierungen AISi, AlMg oder AlSiMg vorliegen, also einer Metalllegierung aus dem Metall Aluminium und wenigstens einem der weiteren Metalle Silizium und Magnesium. Ganz besonders bevorzugt liegt die Aluminiumkomponente als eine solche Metalllegierung in Form von AlSi vor. Erfindungsgemäß hat sich herausgestellt, dass eine Aluminiumkomponente in Form von metallischem Aluminium beim Aufheizen des erfindungsgemäßen Versatzes auch Aluminiumcarbide bilden kann, die hydratisierbar sind, beispielsweise Al₄C₃. Überraschend hat sich jedoch herausgestellt, dass eine Aluminiumkomponente in Form einer der vorbezeichneten Metalllegierungen beim Aufheizen des Versatzes ausschließlich oder weitgehend Aluminiumoxycarbide bildet, die nicht hydratisierbar sind, beispielsweise Al₄O₄C. Insofern kann die Hydratationsbeständigkeit eines aus dem erfindungsgemäßen Versatz hergestellten ungeformten feuerfesten keramischen Erzeugnisses verbessert werden, wenn als Aluminiumkomponente eine Aluminium umfassenden Metalllegierung, insbesondere in Form wenigstens einer der vorbezeichneten Metalllegierungen vorliegt.

Soweit die Aluminiumkomponente in Form einer oder mehrere der Metalllegierungen AISi, AlMg oder AlSiMg vorliegt, bestehen diese Legierungen bevorzugt zu wenigstens 70 Masse-%, bezogen auf die Gesamtmasse der Metalllegierung, aus Aluminium, besonders bevorzugt zu wenigstens 80 Masse-% und noch weiter bevorzugt zu wenigstens 85 Masse-%.

Bevorzugt weist der Versatz die Aluminiumkomponente in einem Anteil von wenigstens 1 Masse-% auf, noch bevorzugter in einem Anteil von wenigstens 2 Masse-% und noch bevorzugter in einem Anteil von wenigstes 3 Masse-%. Ferner weist der erfindungsgemäße Versatz die Aluminiumkomponente bevorzugt in einem Anteil von höchstens 10 Masse-% auf, noch bevorzugter in einem Anteil von höchstens 8 Masse-% und noch bevorzugter in einem Anteil von höchstens 6 Masse-%. Insoweit kann der Versatz die Aluminiumkomponente in einem Anteil im Bereich von 1 bis 10 Masse-% aufweisen, bevorzugter in einem Anteil im Bereich von 2 bis 8 Masse-% und noch bevorzugter in einem Anteil im Bereich von 2 bis 6 Masse-%. Die vorstehenden Angaben in Masse-% sind jeweils bezogen auf die Gesamtmasse des Versatzes.

Die Aluminiumkomponente liegt bevorzugt in Form von Pulver oder Grieß vor, insbesondere liegt die Aluminiumkomponente bevorzugt in einem Anteil von wenigstens 90 Masse-%, bezogen auf die Gesamtmasse der Aluminiumkomponente, in einer Korngröße unter 500 µm vor, wobei die Korngröße bestimmt ist gemäß ISO 13320:2009-10. Der Vorteil der Verwendung einer Aluminiumkomponente in Pulverform besteht insbesondere darin, dass diese sehr gleichmäßig und homogen über den Versatz verteilbar ist.

Der Versatz umfasst eine Grundkomponente, die einen oder mehrere Rohstoffe auf Basis Magnesia umfasst. Bevorzugt besteht die Grundkomponente aus einem oder mehreren der folgenden Rohstoffe auf Basis Magnesia: Sintermagnesia oder Schmelzmagnesia. Besonders bevorzugt besteht die Grundkomponente aus Sintermagnesia, insbesondere bevorzugt aus hochreiner Sintermagnesia. Nach einer bevorzugten Ausführungsform ist vorgesehen, dass die Grundkomponente aus Sintermagnesia mit einem Anteil von wenigstens 97 Masse-% MgO, bezogen auf die Gesamtmasse der Sintermagnesia, besteht.

Insbesondere ist vorgesehen, dass die Grundkomponente zu wenigstens 90 Masse-% aus Magnesia, also MgO, besteht, bevorzugter zu wenigstens 95 Masse-% und noch bevorzugter zu wenigstens 97 Masse-%, jeweils bezogen auf die Gesamtmasse der Grundkomponente. Soweit die Grundkomponente aus mehreren Rohstoffen auf Basis Magnesia besteht, ist die Zusammensetzung der Grundkomponente derart ausgewählt, dass die Grundkomponente die vorbezeichneten Anteile an Magnesia aufweist.

Die Grundkomponente liegt in dem erfindungsgemäßen Versatz bevorzugt in einem Anteil von wenigstens 75 Masse-% vor und noch bevorzugter in einem Anteil von wenigstens 80 Masse-%. Ferner kann vorgesehen sein, dass die Grundkomponente in dem erfindungsgemäßen Versatz in einem Anteil von höchstens 95 Masse-% vorliegt und noch bevorzugter in einem Anteil von höchstens 90 Masse-%. Insoweit kann die Grundkomponente in dem erfindungsgemäßen Versatz bevorzugt in einem Anteil im Bereich von 75 bis 95 Masse-% vorliegen und noch bevorzugt in einem Anteil im Bereich von 80 bis 90 Masse-%. Die vorstehenden Angaben in Masse-% sind jeweils bezogen auf die Gesamtmasse des Versatzes.

Die Grundkomponente liegt bevorzugt zu wenigstens 90 Masse-%, bezogen auf die Gesamtmasse der Grundkomponente, in einer Korngröße unter 5,0 mm vor. Nach einer bevorzugte Ausführungsform ist ferner vorgesehen, dass die Grundkomponente zu wenigstens 10 Masse-%, bezogen auf die Gesamtmasse der Grundkomponente, weiter bevorzugt in einem Anteil im Bereich von 10 bis 35 Masse-% und noch weiter bevorzugt in einem Anteil im Bereich von 20 bis 30 Masse-%, in einer Korngröße unter 100 µm vorliegt. Die Korngröße ist dabei bestimmt gemäß DIN 66165-02:2016-08.

Der Versatz weist eine Kohlenstoffkomponente auf, die aus einem oder mehreren Kohlenstoffträgern besteht. Kohlenstoffträger sind Rohstoffe, die überwiegend aus freiem Kohlenstoff bestehen. Bevorzugt besteht die Kohlenstoffkomponente aus einem oder mehreren der folgenden Kohlenstoffträger: Graphit oder Russ. Graphit kann dabei insbesondere in Form von Flocken oder kugelförmigen Partikeln vorliegen.

Nach einer Ausführungsform ist vorgesehen, dass die Kohlenstoffkomponente zu wenigstens 90 Masse-%, bezogen auf die gesamte Masse der Kohlenstoffkomponente, aus freiem Kohlenstoff besteht, bevorzugter zu wenigstens 95 Masse-% und noch bevorzugter zu wenigstens 99 Masse-%. Soweit die Kohlenstoffkomponente aus mehreren Rohstoffen, die überwiegend aus freiem Kohlenstoff bestehen, gebildet ist, ist die Zusammensetzung der Kohlenstoffkomponente derart ausgewählt, dass die Kohlenstoffkomponente die vorbezeichneten Anteile an freiem Kohlenstoff aufweist.

Die Kohlenstoffkomponente liegt in dem erfindungsgemäßen Versatz bevorzugt in einem Anteil von wenigstens 2 Masse-% vor, bevorzugter in einem Anteil von wenigstens 3 Masse-% und noch bevorzugter in einem Anteil von wenigstens 5 Masse-%. Ferner kann bevorzugt vorgesehen sein, dass die Kohlenstoffkomponente in dem erfindungsgemäßen Versatz in einem Anteil von höchstens 12 Masse-% vorliegt, bevorzugter in einem Anteil von höchstens 9 Masse-% und noch bevorzugter in einem Anteil von höchstens 7 Masse-%. Insoweit kann beispielsweise vorgesehen sein, dass der erfindungsgemäße Versatz Anteile an der Kohlenstoffkomponente im Bereich von 2 bis 12 Masse-% aufweist, bevorzugter in einem Anteil im Bereich von 3 bis 9 Masse-% und noch bevorzugter in einem Anteil im Bereich von 5 bis 7 Masse-%. Die vorstehenden Angaben in Masse-% sind jeweils bezogen auf die Gesamtmasse des Versatzes.

Die Kohlenstoffkomponente liegt bevorzugt in Pulverform vor. Nach einer bevorzugten Ausführungsform ist vorgesehen, dass wenigstens 90 % der Kohlenstoffkomponente, bezogen auf die Gesamtmasse der Kohlenstoffkomponente, in einer Korngröße unter 500 µm vorliegen, bestimmt gemäß ISO 13320:2009-10.

Anteil von höchstens 7 Masse-%. Insoweit kann beispielsweise vorgesehen sein, dass der erfindungsgemäße Versatz Anteile an der Kohlenstoffkomponente im Bereich von 2 bis 12 Masse-% aufweist, bevorzugter in einem Anteil im Bereich von 3 bis 9 Masse-% und noch bevorzugter in einem Anteil im Bereich von 5 bis 7 Masse-%. Die vorstehenden Angaben in Masse-% sind jeweils bezogen auf die Gesamtmasse des Versatzes.

Die Kohlenstoffkomponente liegt bevorzugt in Pulverform vor. Nach einer bevorzugten Ausführungsform ist vorgesehen, dass wenigstens 90 % der Kohlenstoffkomponente, bezogen auf die Gesamtmasse der Kohlenstoffkomponente, in einer Korngröße unter 500 µm vorliegen, bestimmt gemäß ISO 13320:2009-10.

Erfindungsgemäß hat sich herausgestellt, dass der erfindungsgemäße Versatz sehr sensibel auf die Anwesenheit weiterer Komponenten, die neben den vorbezeichneten Komponenten im Versatz vorliegen, reagieren kann. Nach einer bevorzugten Ausführungsform ist daher vorgesehen, dass der Versatz zu wenigstens 95 Masse-% aus der Grundkomponente, der Kohlenstoffkomponente, der Aluminiumkomponente, dem wässrigen Bindemittel und Aluminiumsulfat besteht, bevorzugter zu wenigstens 97 Masse-% und noch bevorzugter zu wenigstens 99 Masse-%. Die vorstehenden Angaben in Masse-% sind jeweils bezogen auf die Gesamtmasse des Versatzes.

Entsprechend kann vorgesehen sein, dass der erfindungsgemäße Versatz - neben der Grundkomponente, der Kohlenstoffkomponente, der Aluminiumkomponente, dem wässrigen Bindemittel und Aluminiumsulfat - weitere Komponenten in einem Anteil unter 5 Masse-% aufweist, bezogen auf die Gesamtmasse bevorzugter in einer Korngröße unter 200 µm, bestimmt gemäß ISO 13320:2009-10.

Eine weitere Komponente in Form von metallischem Silizium kann in dem Versatz beispielsweise in einem Anteil von höchstens 5 Masse-% vorliegen, bezogen auf die Gesamtmasse des Versatzes. Metallisches Silizium kann bevorzugt zu wenigstens 90 Masse-%, bezogen auf die Gesamtmasse an metallischem Silizium, in einer Korngröße unter 500 µm vorliegen, bestimmt gemäß ISO 13320:2009-10.

Eine weitere Komponente in Form von Dispergierer kann in dem Versatz beispielsweise in einem Anteil von höchstens 1,0 Masse-% vorliegen, bevorzugt in einem Anteil im Bereich von 0,2 bis 1,0 Masse-% und noch bevorzugter in einem Anteil im Bereich von 0,2 bis 0,8 Masse-%, jeweils bezogen auf die Gesamtmasse des Versatzes.

Dispergierer kann in Form eines oder mehrerer Stoffe vorliegen, die eine gute Dispergierwirkung auf die Kohlenstoffkomponente in dem Versatz ausüben. Insbesondere kann der Dispergierer beispielsweise in Form eines oder mehrerer der folgenden Stoffe vorliegen: Polycarboxylate, Polycarbonsäuren, Polyvinyle, Polyvinylsäuren oder Polyalkohole. Besonders bevorzugt kann der Dispergierer in Form von Polycarboxylaten vorliegen, insbesondere auch in Form von modifizierten Polycarboxylaten.

Eine weitere Komponente in Form wenigstens eines Bindemittels in Form von Harz, Teer, Bitumen oder Pech kann in dem Versatz beispielsweise in einem Anteil von höchstens 1,0 Masse-% vorliegen. Bevorzugt liegt ein solches Bindemittel in einem Anteil von höchstens 0,5 Masse-%, besonders bevorzugt in einem Anteil von höchstens 0,1 Masse-% in dem Versatz vor. Die vorstehenden Angaben in Masse-% sind jeweils bezogen auf die Gesamtmasse des Versatzes.

Gegenstand der Erfindung ist auch ein Verfahren zur Herstellung eines ungeformten feuerfesten Erzeugnisses, umfassend die folgenden Schritte:
Zur Verfügungstellung eines erfindungsgemässen Versatzes;
Zur Verfügungstellung eines Behälters zur Aufnahme einer Stahlschmelze in einer Anlage zur Behandlung von Stahl;
Gießen des Versatzes auf einen Bereich des Behälters, der bei Anwendung des Behälters in der Anlage in Kontakt mit der Stahlschmelze tritt;
Aufheizen des Behälters derart, dass der auf den Bereich gegossene Versatz ein ungeformtes feuerfestes keramisches Erzeugnis bildet.

Der erfindungsgemäße Versatz wird demnach in Form einer Gießmasse verwendet. Besonders bevorzugt wird das erfindungsgemäße Verfahren angewandt in einer Anlage zur Behandlung von Stahl, also in einer Anlage zum Erschmelzen oder Vergießen von Stahl, insbesondere also in einem Elektrolichtbogenofen oder in einer Stranggießanlage. Soweit das erfindungsgemäße Verfahren in einer Stranggießanlage angewandt wird, kann der Behälter, auf einen Bereich desselben der erfindungsgemäße Versatz vergossen wird, insbesondere ein Konverter oder eine Gießpfanne der Stranggießanlage sein. Der Versatz kann dabei insbesondere auf Bereiche des Behälters in Form von Fugen, Spalten oder verschlissenen Bereichen gegossen werden.

Im Rahmen der Erfindung hat sich herausgestellt, dass der erfindungsgemäße Versatz insbesondere hervorragend zur Zustellung und Reparatur der Schlackenzone einer Gießpfanne zum Vergießen von Stahl verwendet werden kann. Bei der Schlackenzone handelt es sich bekanntermaßen um den Bereich einer Gießpfanne, der in Kontakt mit der auf der Stahlschmelze befindlichen Schlacke tritt. Insofern kann nach einer Ausführungsform des erfindungsgemäßen Verfahrens vorgesehen sein, dass der Behälter zur Aufnahme einer Stahlschmelze in Form einer Gießpfanne zur Verfügung gestellt wird und der Versatz auf die Schlackenzone der Gießpfanne gegossen wird. Das erfindungsgemäße Verfahren kann dabei gemäß dem Stand der Technik derart durchgeführt werden, dass zur Bildung der inneren Kontur der Gießpfanne im Bereich der Schlackenzone durch den Versatz eine in der Gießpfanne angeordnete Schablone verwendet wird. Ein solches Verfahren gemäß dem Stand der Technik wird beispielsweise in "Veitsch-Radex Rundschau", Heft 1-2/1994, Seite 494 beschrieben.

Nach einer Ausführungsform kann insoweit vorgesehen sein, dass das erfindungsgemäße Verfahren ferner die folgenden Schritte umfasst:
Zur Verfügungstellung einer Schablone für die innere Kontur einer Gießpfanne im Bereich der Schlackenzone;
Anordnung der Schablone in einer Gießpfanne derart, dass zwischen der Schablone und der Gießpfanne ein Zwischenraum ausgebildet wird,
wobei die den Zwischenraum begrenzende Oberfläche der Schablone der inneren Kontur der Gießpfanne im Bereich der Schlackenzone entspricht.

Der Verfahrensschritt des Gießens des Versatzes erfolgt dabei wie folgt: Gießen des Versatzes auf den Bereich der Schlackenzone der Gießpfanne durch Gießen des Versatzes in den Zwischenraum.

Beim Aufheizen des Behälters im Betrieb desselben reagiert die Aluminiumkomponente des Versatzes beziehungsweise der Gießmasse zunächst vollständig oder weitgehend mit dem Kohlenstoff der Kohlenstoffkomponente sowie Luftsauerstoff und Luftstickstoff zu Aluminiumoxycarbiden und Aluminiumcarbonitrid, welche dem Versatz bereits eine hohe Festigkeit verleihen. Ab einer Temperatur von etwa 1.000°C bildet das Aluminium des Versatzes mit der Magnesia der Grundkomponente ferner teilweise Magnesiaspinell (MgAl₂O₄) aus. Bei weiterem Aufheizen des Behälters bildet sich vermehrt Magnesiaspinell. Dieser Magnesiaspinell bildet sich insbesondere in den Bereichen aus, in denen im Versatz die Aluminiumkomponente neben der Grundkomponente vorlag. Ab einer Temperatur von etwa 1.300°C bildet sich das Gefüge des keramischen Erzeugnisses aus, das insbesondere aus über Magnesiaspinell miteinander versinterten Körnern der Grundkomponente besteht sowie Aluminiumoxicarbiden sowie gegebenenfalls Aluminiumcarbonitrid und Al₂O₃.

Insofern wird der Behälter bei der Durchführung des erfindungsgemäßen Verfahrens bevorzugt auf eine Temperatur von wenigstens 1.450°C aufgeheizt, besonders bevorzugt bis auf eine Temperatur von etwa 1.600°C.

Das durch das Verfahren hergestellte, ungeformte feuerfeste keramische Erzeugnis stellt sich danach als ein ungeformtes feuerfestes keramisches Erzeugnis, also ein ungeformtes feuerfestes Erzeugnis mit einer Sinterbindung beziehungsweise als ein keramischer Sinterkörper dar. Die Sinterbindung ist dabei insbesondere zwischen den Körnern der Grundkomponente in Form von Sinterbrücken aus Magnesiaspinell ausgebildet.

Das Gefüge eines durch das erfindungsgemäße Verfahren auf Grundlage des erfindungsgemäßen Versatzes hergestellten, ungeformten feuerfesten Erzeugnisses unterscheidet sich insoweit nachhaltig von Gefügen ungeformter feuerfester Erzeugnisse nach dem Stand der Technik, die ebenfalls auf Basis eines Versatzes aus Magnesia und Kohlenstoff hergestellt worden sind. Denn während im Gefüge eines ungeformten feuerfesten Erzeugnisses nach dem Stand der Technik, welches aus einem Versatz auf Basis Magnesia und Kohlenstoff hergestellt worden ist, vorwiegend eine Kohlenstoffbindung vorliegt, liegt im Gefüge des erfindungsgemäßen ungeformten feuerfesten Erzeugnisses ganz überwiegend eine Sinterbindung vor.

Gegenstand der vorliegenden Erfindung ist auch ein ungeformtes feuerfestes keramisches Erzeugnis, welches durch ein erfindungsgemäßes Verfahren erhalten ist, und welches die folgenden Phasen umfasst:
Periklas;
Magnesiaspinell; und
Aluminiumoxycarbid.

Das Gefüge des erfindungsgemäßen Erzeugnisses stellt sich im Wesentlichen dar als eine Matrix aus über Sinterbrücken aus Magnesiaspinell miteinander versinterten Körnern aus Magnesia (Periklas, MgO), mit darin eingelagerten Gefügebereichen aus Aluminiumoxycarbid und gegebenenfalls Aluminicarbonitrid und Korund (Al₂O₃).

Bevorzugt kann ein erfindungsgemäßes Erzeugnis zu wenigstens 95 Masse-%, bezogen auf die Gesamtmasse des Erzeugnisses, besonders bevorzugt zu 97 Masse-% aus den vorbezeichneten Phasen bestehen.

Das erfindungsgemäße Erzeugnis kann bevorzugt zu wenigstens 75 Masse-%, bezogen auf die Gesamtmasse des Erzeugnisses, bevorzugter zu einem Anteil im Bereich von 75 bis 90 Masse-% und noch bevorzugter zu einem Anteil im Bereich von 75 bis 85 Masse-% aus Periklas bestehen. Ferner kann das erfindungsgemäße Erzeugnis bevorzugt, bezogen auf die Gesamtmasse des Erzeugnisses, zu einem Anteil im Bereich von 10 bis 25 Masse-% noch bevorzugter zu einem Anteil im Bereich von 15 bis 25 Masse-% aus Magnesiaspinell und Aluminiumoxycarbid bestehen. Aluminiumoxycarbid kann bevorzugt in Form von Al₄O₄C vorliegen.

Das erfindungsgemäße ungeformte feuerfeste Erzeugnis zeichnet sich durch eine offene Porosität aus, die insbesondere im Bereich von 16 bis 22 Volumen-% liegen kann, bestimmt gemäß DIN EN ISO 1927-8:2012.

Trotz dieser hohen offenen Porosität weist das erfindungsgemäße Erzeugnis gute Festigkeitswerte auf. Dabei kann das erfindungsgemäße Erzeugnis wenigstens eine der folgenden physikalischen Eigenschaften aufweisen, wobei die Eigenschaften bestimmt sind gemäß DIN EN ISO 1927-8:2012 an einem aus dem Versatz nach Verkokung bei 1.500°C (unter reduzierender Atmosphäre) hergestellten feuerfesten keramischen Erzeugnis:

| | |
|---|---|
| Rohdichte: | 2,55 - 2,70 g/cm³; |
| Offene Porosität: | 16 - 22 Volumen-%; |
| Kaltbiegefestigkeit: | 0,5 - 5 MPa; |
| Kaltdruckfestigkeit: | 15 - 40 MPa; |
| Heißbiegefestigkeit (1.400°C, reduzierende Atmosphäre): | 5 - 8 MPa; |
| Heißbiegefestigkeit (1.500°C, reduzierende Atmosphäre): | 4 - 7 MPa. |

Weitere Merkmale der Erfindung ergeben sich aus den Ansprüchen sowie den nachfolgenden Ausführungsbeispielen der Erfindung.

Sämtliche Merkmale der Erfindung können, einzeln oder in Kombination, beliebig miteinander kombiniert sein.

### Beispiel 1

Gemäß einem Ausführungsbeispiel der Erfindung wurde ein Versatz zur Verfügung gestellt, der aus den folgenden Komponenten in den folgenden Massenanteilen, jeweils bezogen auf die Gesamtmasse des Versatzes, bestand:
Eine Grundkomponente aus Sintermagnesia: 82 Masse-%;
Eine Kohlenstoffkomponente in Form von mikrokristallinem Graphit: 5,5 Masse-%;
Eine Aluminiumkomponente in Form einer AlSi-Legierung: 3,8 Masse-%;
Ein wässriges Bindemittel: 7 Masse-%;
Wasserlösliches Sulfat: 0,5 Masse-%;
Mikrosilika: 1 Masse-%; und
Dispergierer: 0,2 Masse-%.

Die Sintermagnesia der Grundkomponente lag in hochreiner Form mit einem Anteil an MgO von 98,0 Masse-% vor, bezogen auf die Gesamtmasse der Sintermagnesia. Daneben wies die Sintermagnesia einen Anteil an SiO₂ von 0,2 Masse-% und einen Anteil an CaO unter 0,9 Masse-% auf. Die Sintermagnesia lag in einer maximalen mittleren Korngröße von 6 mm und zu über 90 Masse-%, bezogen auf die Gesamtmasse der Sintermagnesia, in einer Korngröße unter 5 mm vor.

Die Aluminiumkomponente lag in Form einer AlSi-Legierung, also einer Metalllegierung aus Aluminium und Silizium vor, bestehend aus 88 Masse-% metallischem Aluminium und 12 Masse-% metallischem Silizium, jeweils bezogen auf die Gesamtmasse der Aluminiumkomponente.

Das wässrige Bindemittel bestand aus Wasser und Polyacrylsäure mit einem Anteil an Wasser von 88 Masse-% und einem Anteil an Polyacrylsäure von 12 Masse-%, jeweils bezogen auf die Gesamtmasse des Bindemittels, vor, wobei die Polyacrylsäure wiederum in einer Konzentration von 50 Masse-% Polyacrylsäure zu 50 Masse-% Wasser vorlag.

Das wasserlösliche Sulfat lag in Form von Aluminiumsulfat vor, das in dem Wasser des Bindemittels gelöst vorlag.

Der Dispergierer lag in Form eines rieselfähigen Pulvers auf Basis von modifiziertem Polycarboxylat vor.

Die Kornverteilung dieser Komponenten, bestimmt gemäß ISO 13320:2009-10, war wie in der nachfolgenden Tabelle 1 angegeben:

**Tabelle 1**

| Komponente | d10 [µm] | d50 [µm] | d90 [µm] | Anteil der Komponente < 63 µm [Masse-%] |
|---|---|---|---|---|
| Graphit | 2,5 | 20,5 | 79,1 | 82 |
| AlSi-Legierung | 20,8 | 68,6 | 130,1 | 44,4 |
| Aluminiumsulfat | 24,4 | 183,1 | 399,4 | 20,3 |
| Mikrosilika | 1,3 | 9,8 | 141,1 | 77,0 |
| Dispergierer | 10,6 | 44,9 | 122,0 | 65,2 |

Die Komponenten des Versatzes wurden innig miteinander vermischt, so dass anschließend ein homogener Versatz vorlag. Der Versatz wurde anschließend in Form einer Gießmasse verwendet. Hierzu wurde der Versatz auf den Bereich einer Gießpfanne für das Vergießen einer Stahlschmelze aufgegossen, der bei der Anwendung der Gießpfanne im Bereich der Schlackenzone der Stahlschmelze liegen würde. Bei der Anwendung der Gießpfanne wurde diese anschließend auf eine Temperatur von etwa 1.600°C aufgeheizt. Während des Aufheizens bildete die AlSi-Legierung zunächst mit der Kohlenstoffkomponente und Luftsauerstoff Aluminiumoxycarbide aus, die den Versatz bis zum Einsetzen der Versinterung der Grundkomponente bereits eine gewisse Festigkeit verliehen. Ab einer Temperatur von etwa 1.300°C bildete das Aluminium mit der Magnesia der Grundkomponente ferner Magnesiaspinell aus. Schließlich bildete sich ab einer Temperatur von etwa 1.450°C eine Sinterbindung zwischen den Körnern der Grundkomponente aus. Nach erfolgter Versinterung wurde ein ungeformtes feuerfestes keramisches Erzeugnis aus dem Versatz erhalten, welches zu über 95 Masse-%, bezogen auf die Gesamtmasse des Erzeugnisses, aus den folgenden Phasen bestand: Periklas, Magnesiaspinell und Aluminiumoxycarbid.

Die Oxidanalyse des Erzeugnisses (RFA) war wie folgt:

| | |
|---|---|
| MgO: | 89,8 Masse-% |
| Al₂O₃: | 6,6 Masse-% |
| SiO₂: | 2,3 Masse-% |
| CaO: | 0,8 Masse-% |
| Fe₂O₃: | 0,5 Masse-% |

Der Glühverlust betrug 5,8 Masse-% (nach RFA bei 1.050°C Glühen). Der Kohlenstoffgehalt betrug 5,0 Masse-%, bezogen auf das Erzeugnis ohne den Kohlenstoff (nach LECO-C-Analyse vor dem Glühen).

Das Erzeugnis zeichnete sich durch die folgenden physikalischen Eigenschaften aus, bestimmt gemäß DIN EN ISO 1927-6:2012:

Prüfwerte nach 110°C unter reduzierenden Bedingungen:

| | |
|---|---|
| Rohdichte: | 2,64 g/cm³ |
| Offene Porosität: | 14 Volumen-% |
| Kaltbiegefestigkeit: | 8 MPa |
| Kaltdruckfestigkeit: | 34 MPa. |

Das Erzeugnis zeichnete sich ferner durch die folgenden physikalischen Eigenschaften aus, bestimmt gemäß DIN EN ISO 1927-8:2012:

Prüfwerte nach 1.000°C unter reduzierenden Bedingungen:

| | |
|---|---|
| Rohdichte: | 2,60 g/cm³ |
| Offene Porosität: | 20 Volumen-% |
| Kaltbiegefestigkeit: | 2 MPa |
| Kaltdruckfestigkeit: | 20 MPa. |

Prüfwerte nach 1.500°C unter reduzierenden Bedingungen:

| | |
|---|---|
| Rohdichte: | 2,57 g/cm³ |
| Offene Porosität: | 21 Volumen-% |
| Kaltbiegefestigkeit: | 3 MPa |
| Kaltdruckfestigkeit: | 20 MPa |
| Heißbiegefestigkeit (1.400°C, reduzierende Atmosphäre): | 6,5 MPa |
| Heißbiegefestigkeit (1.500°C, reduzierende Atmosphäre): | 5,5 MPa |

### Beispiel 2

Im Rahmen eines zweiten Ausführungsbeispiels wurde zur Überprüfung der Korrosionsbeständigkeit eines erfindungsgemäßen Erzeugnisses ein Korrosionstest gemäß dem sogenannten "Induktion Tiegel Ofen Test" (ITO-Test) durchgeführt.

Hierzu wurden zunächst ein Ausführungsbeispiel eines erfindungsgemäßen Versatzes V1 sowie ein Versatz V2 gemäß dem Stand der Technik erstellt.

Der erfindungsgemäße Versatz V1 bestand aus den folgenden Komponenten in den folgenden Massenanteilen, jeweils bezogen auf die Gesamtmasse des Versatzes:
Eine Grundkomponente aus Sintermagnesia: 81 Masse-%;
Eine Kohlenstoffkomponente in Form von mikrokristallinem Graphit und Ruß: 7 Masse-%;
Eine Aluminiumkomponente in Form einer AlSi-Legierung: 4 Masse-%; Metallisches Silizium: 0,5 Masse-%;
Ein wässriges Bindemittel: 7,2 Masse-%;
Wasserlösliches Sulfat: 0,3 Masse-%.

Der Versatz V2 gemäß dem Stand der Technik bestand aus den folgenden Komponenten in den folgenden Massenanteilen, jeweils bezogen auf die Gesamtmasse des Versatzes:
Eine Grundkomponente aus Sintermagnesia: 82 Masse-%;
Eine Kohlenstoffkomponente in Form von mikrokristallinem Graphit und Ruß: 6,5 Masse-%;
Metallisches Silizium: 2 Masse-%;
Mikrosilika: 2,5 Masse-%;
Ein wässriges Bindemittel: 7 Masse-%.

Die Sintermagnesia, die Aluminiumkomponente, das wässrige Bindemittel, das wasserlösliche Sulfat sowie die Mikrosilika lagen gemäß Beispiel 1 vor.

Die Komponenten der Versätze V1 und V2 wurden jeweils innig miteinander vermischt, anschließend in Formen gegossen und nach einer Trocknung schließlich auf etwa 1.600°C aufgeheizt.

Aus dem Versatz V1 wurden anschließend Erzeugnisse V1 und aus dem Versatz V2 Erzeugnisse V2 erhalten.

Zur Überprüfung der Korrosionsbeständigkeit der Erzeugnisse V1 und V2 wurden diese als Teil einer Ofenausmauerung verwendet, an der ein Korrosionstest gemäß dem sogenannten "Induktion Tiegel Ofen Test" (ITO-Test) wie folgt durchgeführt wurde: Zunächst wurde ein Ofen errichtet, dessen feuerfeste Ausmauerung wandseitig aus Steinsegmenten gebildet war. Im späteren Schlackenbereich war die Ausmauerung aus Steinsegmenten der Erzeugnisse V1 und V2 gebildet. Die feuerfeste Ausmauerung umschloss einen kreiszylindrischen Ofenraum, in den ein passender, kreiszylindrischer Metalleinsatz (60 kg Stahl) gesetzt wurde. Der Metalleinsatz wurde durch Spulen, die ringförmig außen um die Ausmauerung geführt waren, auf 1.700 °C erhitzt und erschmolzen. Auf die Stahlschmelze wurde ein Schlackenpulver (3 kg mit der chemischen Zusammensetzung gemäß Tabelle 2; Verhältnis C/S von 0,7) aufgegeben, welches aufschmolz und einen Schlackenbereich mit einer korrosiven Schlacke bildete. Die Schlacke reagierte in diesem Schlackenbereich mit den Steinsegmenten V1 und V2 und beschädigte diese hierdurch korrosiv. Die Steinsegmente wurden insgesamt etwa 4 Stunden durch die Schlacke korrodiert, wobei die Schlacke jeweils nach 30, 60 und 90 Minuten um jeweils 5 Masse-% Flussspat sowie nach 120, 150, 180 und 210 Minuten um jeweils 10 % Flussspat ergänzt wurde. Anschließend wurde die Ausmauerung ausgebaut und an den Steinsegmenten V1 und V2 der Korrosionsgrad getestet, nämlich die Verschleißtiefe und die Verschleißfläche.

**Tabelle 2**

| Bestandteil der Schlacke | Anteil in der Schlacke [Masse-% in Bezug auf die Gesamtmasse der Schlacke] |
|---|---|
| SiO₂ | 42,0 |
| CaO | 31,0 |
| Al₂O₃ | 11,0 |
| Fe₂O₃ | 10,0 |
| MnO | 3,8 |
| MgO | 0,8 |
| Sonstige | 1,4 |

In Tabelle 3 sind die Ergebnisse dieses Korrosionstests wiedergegeben. Dabei gibt die "Verschleißfläche" den Mittelwert der maximalen Querschnittsfläche der korrodierten Bereiche der Steinsegmente V1 und V2 an, während "Verschleißtiefe" den Mittelwert der maximalen Verschleißtiefe der Steinsegmente V1 und V2 angibt. Wie die Werte in Tabelle 3 zeigen, liegen diese Werte bei den Steinsegmenten V1 gemäß der Erfindung signifikant unterhalb der Werte bei den Steinsegmenten V2 nach dem Stand der Technik.

**Tabelle 3**

| Größe | V1 | V2 |
|---|---|---|
| Verschleißfläche [cm²] | 18,3 | 34,7 |
| Verschleißtiefe [mm] | 27,5 | 44,0 |

## Patentansprüche

1. Feuerfester Versatz, umfassend die folgenden Komponenten:
1.1 Eine Grundkomponente umfassend einen oder mehrere Rohstoffe auf Basis Magnesia;
1.2 eine Kohlenstoffkomponente umfassend einen oder mehrere Kohlenstoffträger;
1.3 eine Aluminiumkomponente umfassend einen oder mehrere Träger metallischen Aluminiums;
1.4 ein wässriges Bindemittel;
1.5 Aluminiumsulfat.

2. Versatz nach Anspruch 1, wobei die Grundkomponente zu wenigstens 90 Masse-% aus Magnesia besteht.

3. Versatz nach wenigstens einem der vorhergehenden Ansprüche, wobei die Grundkomponente aus einem oder mehreren der folgenden Rohstoffe auf Basis Magnesia besteht: Sintermagnesia oder Schmelzmagnesia.

4. Versatz nach wenigstens einem der vorhergehenden Ansprüche, wobei die Grundkomponente in einem Anteil von wenigstens 75 Masse-% vorliegt.

5. Versatz nach wenigstens einem der vorhergehenden Ansprüche, wobei die Aluminiumkomponente aus einem oder mehreren der folgenden Träger metallischen Aluminiums besteht: Metallisches Aluminium oder wenigstens eine Aluminium umfassende Metalllegierung.

6. Versatz nach wenigstens einem der vorhergehenden Ansprüche, wobei Aluminiumsulfat in einem Anteil im Bereich von 0,05 bis 1,0 Masse-% vorliegen.

7. Versatz nach wenigstens einem der vorhergehenden Ansprüche, wobei das wässrige Bindemittel in einem Anteil im Bereich von 4,0 bis 15,0 Masse-% vorliegt.

8. Verfahren zur Herstellung eines ungeformten feuerfesten keramischen Erzeugnisses, umfassend die folgenden Schritte:
8.1 Zur Verfügungstellung eines Versatzes nach wenigstens einem der vorhergehenden Ansprüche:
8.2 Zur Verfügungstellung eines Behälters zur Aufnahme einer Stahlschmelze in einer Anlage zur Behandlung von Stahl;
8.3 Gießen des Versatzes auf einen Bereich des Behälters, der bei Anwendung des Behälters in der Anlage in Kontakt mit der Stahlschmelze tritt;
8.4 Aufheizen des Behälters derart, dass der auf den Bereich gegossene Versatz ein ungeformtes feuerfestes keramisches Erzeugnis bildet.

## Claims

1. Refractory batch comprising the following components:
1.1 A basic component comprising one or more raw materials based on magnesia;
1.2 a carbon component comprising one or more carbon carriers;
1.3 an aluminum component comprising one or more metallic aluminum carriers;
1.4 an aqueous binder;
1.5 aluminum sulfate.

2. The batch according to claim 1, wherein the basic component consists of at least 90% by mass of magnesia.

3. The batch according to at least one of the preceding claims, wherein the basic component consists of one or more of the following raw materials based on magnesia: sintered magnesia or fused magnesia.

4. The batch according to at least one of the preceding claims, wherein the basic component is present in a proportion of at least 75% by mass.

5. The batch according to at least one of the preceding claims, wherein the aluminum component consists of one or more of the following carriers of metallic aluminum: metallic aluminum or at least one metal alloy comprising aluminum.

6. The batch according to at least one of the preceding claims, wherein aluminum sulfate is present in a proportion in the range from 0.05 to 1.0% by mass.

7. The batch according to at least one of the preceding claims, wherein the aqueous binder is present in a proportion in the range from 4.0 to 15.0% by mass.

8. Method for producing an unshaped refractory ceramic product, comprising the following steps:
8.1 Providing a batch according to at least one of the preceding claims;
8.2 providing a vessel for holding a molten steel in a steel treatment plant;
8.3 casting the batch onto a portion of the vessel which comes into contact with the molten steel when the vessel is used in the plant;
8.4 heating the vessel so that the batch cast on the portion forms an unshaped refractory ceramic product.

## Revendications

1. Composition réfractaire comprenant les composants suivants :
1.1 un composant de base comprenant une ou plusieurs matières premières à base de magnésie ;
1.2 un composant de carbone comprenant un ou plusieurs supports de carbone ;
1.3 un composant d'aluminium comprenant un ou plusieurs supports d'aluminium métallique ;
1.4 un liant aqueux ;
1.5 du sulfate d'aluminium.

2. Composition selon la revendication 1, dans laquelle le composant de base se compose au moins de l'ordre de 90% en masse de magnésie.

3. Composition selon l'une au moins des revendications précédentes, dans laquelle le composant de base se compose d'une ou plusieurs des matières premières suivantes à base de magnésie : magnésie frittée ou magnésie fondue.

4. Composition selon l'une au moins des revendications précédentes, dans laquelle le composant de base est présent selon une proportion d'au moins 75% en masse.

5. Composition selon l'une au moins des revendications précédentes, dans laquelle le composant d'aluminium se compose d'un ou plusieurs des supports d'aluminium métallique suivants de l'aluminium métallique ou au moins un aluminium comprenant un alliage métallique.

6. Composition selon l'une au moins des revendications précédentes, dans laquelle il y a du sulfate d'aluminium selon une proportion dans la plage de 0,05 à 1,0% en masse.

7. Composition selon l'une au moins des revendications précédentes, dans laquelle le liant aqueux est présent selon une proportion dans la plage de 4,0 à 15,0% en masse.

8. Procédé pour la fabrication d'un produit céramique réfractaire non moulé, comprenant les étapes suivantes :
8.1 la fourniture d'une composition selon l'une au moins des revendications précédentes ;
8.2 la fourniture d'un récipient pour réceptionner de l'acier liquide dans une installation de traitement d'acier ;
8.3 le versement de la composition sur une zone du récipient laquelle, lors de l'utilisation du récipient dans l'installation, arrive en contact avec l'acier liquide ;
8.4 l'échauffement du récipient de manière à ce que la composition versée sur la zone forme un produit céramique réfractaire non moulé.
